# EUROPÄISCHE PATENTSCHRIFT

(11) **EP 3 986 765 B1**
(45) Veröffentlichungstag und Bekanntmachung des Hinweises auf die Patenterteilung: **01.03.2023**
(21) Anmeldenummer: 20754669.8
(22) Anmeldetag: 30.07.2020
(51) Int. Cl.: B61C 5/02

(54) **SYSTEM ZUR KÜHLUNG TECHNISCHER EINRICHTUNGEN IN EINEM SCHIENENFAHRZEUG**
SYSTEM FOR COOLING TECHNICAL UNITS IN A RAIL VEHICLE
SYSTÈME DE REFROIDISSEMENT D'UNITÉS TECHNIQUES DANS UN VÉHICULE FERROVIAIRE

(30) Priorität: 14.08.2019 AT 507172019
(43) Veröffentlichungstag der Anmeldung: 27.04.2022
(73) Patentinhaber: Siemens Mobility Austria GmbH, 1210 Wien (AT)
(72) Erfinder: SCHELANDER-KLOPSCH, Christian, 1230 Wien (AT)
(74) Vertreter: Deffner, Rolf
(86) Internationale Anmeldenummer: PCT/EP2020/071477
(87) Internationale Veröffentlichungsnummer: WO 2021/028229

(56) Entgegenhaltungen:
- EP-A1- 0 794 098
- EP-A1- 0 943 520
- EP-A1- 3 251 914
- FR-A1- 2 703 967
- JP-A- 2002 044 808

## Beschreibung

### Technisches Gebiet

Die Erfindung betrifft ein System zur Kühlung technischer Einrichtungen in einem Schienenfahrzeug.

### Stand der Technik

Schienenfahrzeuge sind mit einer Vielzahl technischer Einrichtungen ausgestattet, welche in ihrem Betrieb Abwärme abgeben. Größere Einrichtungen, wie Klimaanalagen, Antriebs-Leistungselektronik, Umrichter, Druckluftkompressoren, etc. sind meist zu Baugruppen mit einer bestimmten Funktion als sogenannter "Unterflurcontainer" zusammengefasst und unterhalb des Untergestells oder am Dach angeordnet. Diese Container sind in sich geschlossene Gehäuse und umfassen meist eine Zwangsbelüftung mit Luft Ein- und Auslässen sowie Ventilatoren. Die Anordnung dieser Container, insbesondere unterhalb des Untergestells kann es mit sich bringen, dass die Abluft eines Containers zumindest teilweise als Zuluft eines weiteren Containers angesaugt wird. Dadurch verringert sich die Kühlung der in dem betroffenen Container befindlichen Einrichtungen, was zu verringerter Lebensdauer oder zumindest Abschaltung aufgrund Übertemperatur führen kann. Einige elektrische Einrichtungen weisen extrem hohe Ablufttemperaturen auf, beispielsweise Bremswiderstände, sodass es erforderlich ist, deren Abluft von weiteren Einrichtungen fernzuhalten. Die bei modernen Fahrzeugen beengten Platzverhältnisse unterhalb des Untergestells lassen eine thermisch optimale Anordnung der sogenannten Unterflurcontainer zur Verhinderung des Ansaugens bereits erwärmter Abluft als Zuluft (Wärmekurzschluß) jedoch meist nicht zu. Aus der europäischen Patentanmeldung EP 1 095 836 A2 ist es bekannt, mehrere Unterflurcontainer miteinander zu verbinden und gemeinsam mit Kühlluft durchströmen zu lassen. Dabei kann jedoch nicht auf jeweils unterschiedlichen Kühlluftbedarf, insbesondere bei zeitlich veränderlichem Kühlluftbedarf reagiert werden.

Aus der französischen Anmeldeschrift FR2703967A1 ist eine Kühleinrichtung für elektrische Anlagen in einem Schienenfahrzeug bekannt, bei welcher ein zentraler Lufteinlaß vorgesehen ist, über welchen Kühlluft in das Wageninnere eingebracht wird und zu kühlende Einrichtungen in Kammern angeordnet und mit Kühlluft umströmt werden. Die erwärmte Abluft wird dabei mittels eines Ventilators abgesaugt und über einen zentralen Luftauslaß an die Umgebung abgegeben. Eine Einrichtung zur Kühlung von Unterflurgeräten kann der Patentanmeldeschrift EP794098A1 entnommen werden. Darin ist offenbart, einzelnen Antriebskomponenten, wie Stromrichtern, jeweils bestimmte Kammern zuzuweisen und diese Kammern mit einem gemeinsamen Lüfter zu kühlen.

### Darstellung der Erfindung

Der Erfindung liegt daher die Aufgabe zugrunde, ein System zur Kühlung technischer Einrichtungen in einem Schienenfahrzeug anzugeben, welches eine Mehrzahl technischer Einrichtungen ohne gegenseitige Rückwirkungen zu kühlen vermag, wobei insbesondere ein geringer Energieaufwand zur Kühlung erzielt werden soll.

Die Aufgabe wird durch ein System zur Kühlung technischer Einrichtungen in einem Schienenfahrzeug mit den Merkmalen des Anspruchs 1 gelöst. Vorteilhafte Ausgestaltungen sind Gegenstand untergeordneter Ansprüche.

Dem Grundgedanken der Erfindung nach wird ein System zur Kühlung technischer Einrichtungen in einem Schienenfahrzeug beschrieben, welches eine Containerbaugruppe mit mehreren Kammern umfasst, wobei jede technische Einrichtung in einer ihr zugeordneten Kammer angeordnet ist, welche je mindestens eine Zuluftöffnung und je mindestens eine Abluftöffnung umfasst, wobei mindestens ein Lüfter zur Zwangsbelüftung der Kammern sowie Luftführungen zwischen den Lüftern und den Kammern vorgesehen sind, und wobei die Kammern mit kraftbetätigbaren Regelklappen in ihrem jeweiligen Kühlluftstrom ausgestattet sind.

Dadurch ist der Vorteil erzielbar, mittels eines zentralen Lüfters alle in dem System angeordneten technischen Einrichtungen gleichzeitig mit Kühlluft versorgen zu können und den Kühlluftstrom an die aktuelle Verlustleistung jeder technischen Einrichtung kontinuierlich anpassen zu können.

Erfindungsgemäß umfasst ein System zur Kühlung technischer Einrichtungen in einem Schienenfahrzeug eine Containerbaugruppe mit mehreren Kammern. Diese Containerbaugruppe kann beispielsweise als Unterflurcontainer für ein Schienenfahrzeug aufgebaut sein, jedoch in seinen Abmessungen so dimensioniert sein, dass alle technischen Einrichtungen, welche typischerweise in einzelnen Unterflurgeräteträgern angeordnet sind, in dieser Containerbaugruppe Platz finden. Dabei ist jeder technischen Einrichtung je eine Kammer in der Containerbaugruppe zugewiesen. Weiters umfasst das System mindestens einen Lüfter, welcher zentral einen Kühlluftstrom erzeugt und diesen über Luftführungen zu den einzelnen Kammern leitet. Die Luftführungen gewährleisten eine widerstandsarme Führung der Kühlluft zwischen dem Lüfter und den Kammern. Die Kammern sind mit jeweils mindestens einer Zuluftöffnung und mit je einer Abluftöffnung ausgestattet und weisen je mindestens eine kraftbetätigbare Regelklappe auf. Diese Regelklappen sind in dem Kühlluftstrom angeordnet und können diesen modulieren, d.h. in seinem Volumenstrom verändern. In Abhängigkeit von der Art des Kraftantriebs der Regelklappen kann eine stufenlose Modulation des Kühlluftstroms erfolgen oder es erfolgt eine Ein- Ausschaltung. Der Antrieb der Regelklappen kann mittels einer elektrischen Stellantriebs erfolgen oder mittels eines pneumatischen Antriebs. Letzteres ist insbesondere vorteilhaft, wenn keine stufenlose Steuerung der Regelklappen erforderlich ist.

Der Lüfter kann als einzelner Lüfter in Radial- oder Axialbauweise ausgeführt werden und ist vorzugsweise in seiner Drehzahl steuerbar. Ein wesentlicher Vorteil eines größeren, gemeinsamen Lüfters für alle technischen Einrichtungen eines Systems liegt in der reduzierten Schallabgabe gegenüber einer Mehrzahl an kleineren einzelnen Lüftern. Zudem läßt sich ein großer Lüfter in der Regel energieeffizienter betreiben als mehrere kleine Ventilatoren. In bestimmten Anwendungsfällen ist es vorteilhaft, mehrere parallel angeordnete Lüfter vorzusehen. Solcherart kann der Einbau der Lüfter in die Containerbaugruppe flexibler erfolgen und auch bei Ausfall einzelner Lüfter kann eine reduzierte Kühlung aller technischen Einrichtungen in dem System aufrechterhalten werden. Die Strömungsrichtung des Kühlluftstromes ist für die Funktion der Erfindung unerheblich, der Lüfter kann so angeordnet sein, dass er Umgebungsluft in die Kammern befördert oder so, dass er erwärmte Luft aus den Kammern absaugt.

Ein weiterer Vorteil dieses zentralen Lüftungskonzepts ist, dass bei einer redundanten Ausführung von zwei zentralen Lüftern die Ausfallsicherheit deutlich höher ist als bei beispielsweise vier separaten Containern mit jeweils eigenen Lüftern.

Eine bevorzugte Ausführungsform der Erfindung sieht vor, die Kammern mit je einem Temperatursensor zur Messung der in der jeweiligen Kammer herrschenden Temperatur einzusetzen und die solcherart ermittelten Temperaturwerte an eine Steuereinrichtung zu übermitteln. Diese Steuereinrichtung umfasst Mittel zur Ansteuerung der Kraftantriebe der Regelklappen und optional auch Mittel zur Steuerung des gesamten Kühlluftflusses durch Veränderung der Drehzahl des Lüfters. Diese Mittel umfassen typischerweise eine geeignete Leistungselektronik für elektrische Antriebe oder pneumatische Ventile bei druckluftbetriebenen Regelklappen. Die Steuereinrichtung bestimmt aus den an sie ermittelten Temperaturwerten in den einzelnen Kammern die erforderliche Stellung der Regelklappen jeder Kammer und ggf. den erforderlichen Volumenstrom des Lüfters und stellt diese Werte an den Regelklappen und dem Lüfter ein. Solcherart kann bei kurzzeitig erhöhtem Kühlbedarf einer technischen Einrichtung (beispielsweise einem Antriebsumrichter während einer längeren Beschleunigungsphase) die Kühlluft zu dieser Einrichtung umgeleitet werden und dabei eine Einrichtung ohne erhöhtem Kühlbedarf (beispielsweise eine Klimaanlage außer Betrieb) während dieser Zeit von der Kühlluftzufuhr abgetrennt werden.

Es ist vorteilhaft, jeder Kammer eine bestimmte maximale Temperatur zuzuweisen und die Regelung der Stellung der Regelklappen und des Lüfters so auszuführen, dass diese jeweilige maximale Temperatur nicht überschritten wird. Solcherart ist der Vorteil erzielbar, dass temperaturempfindliche technische Einrichtungen (z.B. Leistungselektronik) mit geringerer Temperatur betrieben werden können als unempfindlichere (z.B. Bremswiderstände).

Eine bevorzugte Ausführungsform der Erfindung sieht vor, zwischen benachbarten Kammern der Containerbaugruppe Verbindungsklappen vorzusehen, welche einen Luftaustausch unmittelbar zwischen diesen Kammern erlauben. Diese Verbindungsklappen sind wie die Regelklappen kraftunterstützt bewegbar, wobei die Stellung der Verbindungsklappen durch die Steuereinrichtung vorgegeben wird. Solcherart ist eine weitergehende Flexibilisierung der Luftströmung in der Containerbaugruppe erzielbar, etwa um kurzfristig erhöhten Kühlluftbedarf einer einzelnen technischen Einrichtung zusätzlich zu deren Einlaßöffnung auch über benachbarte Kammern zu decken. Dabei kann durch die zusätzliche Möglichkeit der temperaturabhängigen seriellen Durchströmung benachbarter Kammern das System noch energieeffizienter betrieben werden.

In weiterer Fortbildung der Erfindung kann auch die Ausblasrichtung der Kühlluft flexibel an den aktuellen Bedarf vorgegeben werden. Insbesondere kann vermieden werden, dass heiße Abluft in Richtung der Passagiere, insbesondere durch den Spalt zwischen einem Bahnsteig und dem Wagenkasten geleitet wird. Dazu sind Lüfterklappen vorzusehen, welche den während der Fahrt geöffneten Kühlluftauslass verschließen können. Gleichzeitig dazu sind andere Klappen zu öffnen, welche die Abluft an unkritischeren Stellen, beispielsweise im Untergestell in axialer Richtung zu den Drehgestellen hin, ausströmen lassen.

Gegenständliches System zur Kühlung technischer Einrichtungen in einem Schienenfahrzeug ist als Containerbaugruppe aufgebaut, welche auf gebräuchliche Weise unter dem Untergestell oder am Dach eines Schienenfahrzeugs angeordnet werden kann. Auf diese Weise läßt sich, aufgrund des Entfalls der Montage mehrerer getrennter Unterflurcontainer eine Beschleunigung der Endmontage des Schienenfahrzeugs erzielen und durch die Regelung der Kühlluftmenge kann eine Einsparung an Energie für den Antrieb des Lüfters erfolgen.

### Kurzbeschreibung der Zeichnungen

Es zeigen beispielhaft:
**Fig.1** Schienenfahrzeug mit Unterflurcontainer.
**Fig.2** Schienenfahrzeug mit Kühlsystem.
**Fig.3** Schienenfahrzeug mit Kühlsystem, längsdurchströmt.
**Fig.4** Schienenfahrzeug mit Kühlsystem und Verbindungsklappen.
**Fig.5** Schienenfahrzeug mit Kühlsystem und seitenselektiver Ausblasung.
**Fig.6** Containerbaugruppe.

### Ausführung der Erfindung

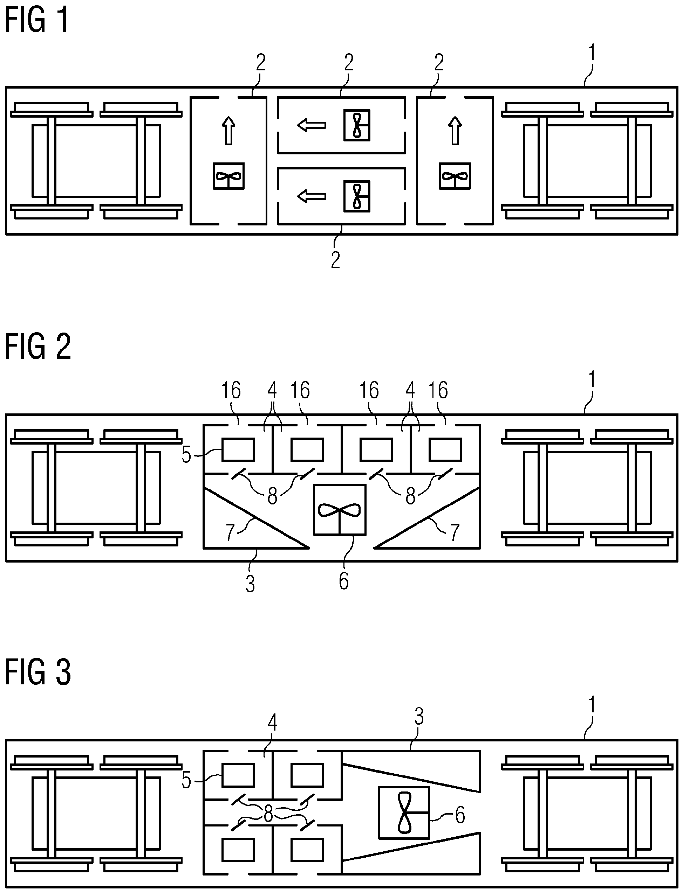

**Fig.1** zeigt beispielhaft und schematisch ein Schienenfahrzeug mit Unterflurcontainer. Es ist die Ansicht auf die Unterseite eines Schienenfahrzeugs 1 mit Unterflurcontainern 2 nach dem Stand der Technik dargestellt. Es sind beispielshaft vier Unterflurcontainer 2 an der Unterseite angeordnet, welche jeweils einer Funktion, d.h. einer Art von technischer Einrichtung zugeordnet sind. Jeder der Unterflurcontainer umfasst eine Kühlvorrichtung mit je einem Lüfter und bläst die erwärmte Kühlluft in eine bestimmte Richtung aus. In gezeigtem Beispiel sind die beiden mittig angeordneten Unterflurcontainer 2 benachteiligt, da die Ausblasung ihrer Kühlluft von einem weiteren Unterflurcontainer 2 behindert ist.

**Fig.2** zeigt beispielhaft und schematisch ein Schienenfahrzeug mit einem Kühlsystem. Es ist die Ansicht auf die Unterseite eines Schienenfahrzeugs 1 mit einem erfindungsgemäßen System zur Kühlung technischer Einrichtungen dargestellt. Dabei ist eine Containerbaugruppe 3 an der Unterseite des Schienenfahrzeugs 1 angeordnet, welche vier Kammern 4 umfasst. In jeder dieser Kammern 4 ist je eine technische Einrichtung 5 angeordnet. Ein Lüfter 6 ist in der Containerbaugruppe 3 so angeordnet, dass die von ihm bewegte Kühlluft mittels Luftleiteinrichtungen 7 zu, bzw. von den Kammern 4 geleitet ist. Die Flußrichtung der Kühlluft ist dabei ohne Belang, der Lüfter 6 kann die Kühlluft sowohl zu den Kammern 4 fördern oder aus diesen absaugen. Die Kammern 4 weisen jeweils eine Zuluftöffnung und eine Abluftöffnung auf, wobei eine der Öffnungen mittels einer Regelklappe 8 ausgestattet ist, mittels welcher der Fluß der Kühlluft durch die jeweilige Kammer 4 regulierbar, bzw. unterbindbar ist.

**Fig.3** zeigt beispielhaft und schematisch ein Schienenfahrzeug mit einem längsdurchströmten Kühlsystem. Es ist ein Schienenfahrzeug 1, ähnlich wie in dem in Fig. 2 dargestellten Ausführungsbeispiel gezeigt, wobei die Anordnung der Kammern 4 so gestaltet ist, dass ein Transport der Kühlluft zu beiden Seiten des Schienenfahrzeugs 1 erfolgt, die Kühlluft also beidseitig ausgeblasen und axial angesaugt, bzw. beidseitig angesaugt und axial ausgeblasen wird.

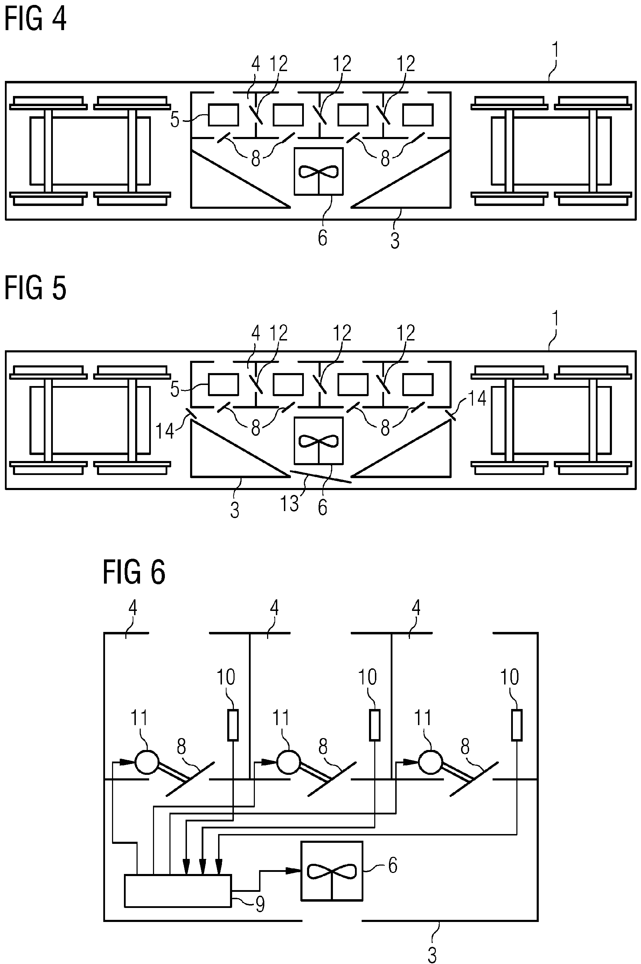

**Fig.4** zeigt beispielhaft und schematisch ein Schienenfahrzeug mit einem Kühlsystem mit Verbindungsklappen. Es ist das Ausführungsbeispiel aus Fig. 2 dargestellt, wobei zusätzlich Verbindungsklappen 12 zwischen benachbarten Kammern 4 angeordnet sind, sodass die Kühlluft unmittelbar zwischen benachbarten Kammern 4 ausgetauscht werden kann. Diese zusätzlichen, regelbaren Strömungswege ermöglichen eine erhöhte Flexibilität der Regelung der Kühlwirkung. Beispielsweise kann so eine technische Einrichtung 5 kurzfristig bei erhöhtem Kühlbedarf zusätzlich durch die benachbarten Kammern 4 Kühlluft erlangen.

**Fig.5** zeigt beispielhaft und schematisch ein Schienenfahrzeug mit einem Kühlsystem und seitenselektiver Ausblasung. Es ist das Ausführungsbeispiel aus Fig. 4 dargestellt, wobei zusätzlich eine Lüfterklappe 13 vorgesehen ist, durch welche die Abfuhr der Kühlluft quer zur Fahrtrichtung des Schienenfahrzeugs 1 erfolgen kann. Diese Lüfterklappe 13 ist Nahe einer Seitenwand angeordnet. Des Weiteren sind zwei Axialklappen 14 vorgesehen, durch welche die Abfuhr der Kühlluft längs zur Fahrtrichtung des Schienenfahrzeugs 1, im Bereich der Drehgestelle erfolgen kann. Die Klappen 13 und 14 sind so ausgeführt, dass sie den Luftstrom durch sie zu unterbrechen vermögen. Somit kann die Position der Kühlluftabfuhr verändert werden, wobei beispielsweise auf offener Strecke die Abfuhr über die Lüfterklappe 13 erfolgt und bei einem Halt in einem Bahnhof die Abfuhr über die Axialklappen 14 erfolgt. Solcherart können die Passagiere vor einem heißen Abluftstrahl geschützt werden. Die Umschaltung der Position des Abluftauslasses kann dabei beispielsweise mit einer Türsteuerung gekoppelt sein, sodass bei sich öffnender Tür die Abluft in Richtung der Drehgestelle gelenkt wird.

**Fig.6** zeigt beispielhaft und schematisch eine Containerbaugruppe. Es ist stark abstrahiert eine Containerbaugruppe 3 dargestellt, welche drei Kammern 4 und einen Lüfter 6 umfasst. Jeder der Kammern 4 ist mit einer kraftbetätigten Regelklappe 8, welche von einem Kraftantrieb 11 zwischen einer offenen und einer geschlossenen Position bewegbar ist, ausgestattet. Weiters ist in jeder Kammer 4 ein Temperatursensor 10 angeordnet. Eine Steuereinrichtung 9 ist mit den zum Betrieb des Lüfters 6 erforderlichen Betriebsmitteln, beispielsweise einer Leistungselektronik zur Drehzahlregelung des Lüfters 6 ausgestattet. Die Kraftantriebe 11 der Regelklappen 8 sind mit der Steuereinrichtung 9 verbunden und durch diese steuerbar. Die Ausgangssignale der Temperatursensoren 10 sind an die Steuereinrichtung 9 geführt, sodass diese in Abhängigkeit der jeweiligen Temperatur in den Kammern 4 die Stellung der Regelklappen 8 sowie die Drehzahl des Lüfters 6 vorgibt.

### Liste der Bezeichnungen

- 1: Schienenfahrzeug
- 2: Unterflurcontainer
- 3: Containerbaugruppe
- 4: Kammer
- 5: Technische Einrichtung
- 6: Lüfter
- 7: Luftführungen
- 8: Regelklappe
- 9: Steuereinrichtung
- 10: Temperatursensor
- 11: Kraftantrieb
- 12: Verbindungsklappe
- 13: Lüfterklappe
- 14: Axialklappe

## Patentansprüche

1. System zur Kühlung technischer Einrichtungen (5) in einem Schienenfahrzeug (1), umfassend eine Containerbaugruppe (3) mit mehreren Kammern (4), wobei jede technische Einrichtung (5) in einer ihr zugeordneten Kammer (4) angeordnet ist, welche je mindestens eine Zuluftöffnung und je mindestens eine Abluftöffnung umfasst, und wobei mindestens ein Lüfter (6) zur Zwangsbelüftung der Kammern (4), sowie Luftführungen (7) zwischen den Lüftern (6) und den Kammern (4) vorgesehen sind,
**dadurch gekennzeichnet, dass**
die Kammern (4) mit kraftbetätigbaren Regelklappen (8) in ihrem jeweiligen Kühlluftstrom ausgestattet sind.

2. System zur Kühlung technischer Einrichtungen (5) nach Anspruch 1,
**dadurch gekennzeichnet, dass** eine Steuereinrichtung (9) und eine Mehrzahl an Temperatursensoren (10) vorgesehen ist, wobei die Steuereinrichtung (9) die Drehzahl der Lüfter (6) und die Stellung der Regelklappen (8) in Abhängigkeit der von den Temperatursensoren (10) erfassten Temperaturen steuert.

3. System zur Kühlung technischer Einrichtungen (5) nach Anspruch 2,
**dadurch gekennzeichnet, dass** die Steuereinrichtung (9) die Regelklappen (8) so ansteuert, dass eine für eine bestimmte Kammer (4) vorgegebene maximale Temperatur nicht überschritten wird.

4. System zur Kühlung technischer Einrichtungen (5) nach einem der Ansprüche 1 bis 3,
**dadurch gekennzeichnet, dass** zwischen benachbarten Kammern (4) kraftbetätigte Verbindungsklappen (12) angeordnet sind, welche eine serielle Durchströmung und somit einen Austausch von Kühlluft zwischen diesen Kammern (4) ermöglichen.

5. System zur Kühlung technischer Einrichtungen (5) nach Anspruch 4,
**dadurch gekennzeichnet, dass**
die Steuereinrichtung (9) mit Mitteln zu Ansteuerung der Kraftantriebe der Verbindungsklappen (12) ausgestattet ist.

6. System zur Kühlung technischer Einrichtungen (5) nach einem der Ansprüche 1 bis 5,
**dadurch gekennzeichnet, dass**
ein pneumatischer Antrieb der Regelklappen (8) vorgesehen ist.

7. System zur Kühlung technischer Einrichtungen (5) nach einem der Ansprüche 1 bis 5,
**dadurch gekennzeichnet, dass**
ein elektrischer Antrieb der Regelklappen (8) vorgesehen ist.

## Claims

1. System for cooling technical units (5) in a rail vehicle (1), comprising a container assembly (3) having a plurality of chambers (4), wherein each technical unit (5) is arranged in a chamber (4) assigned thereto, which chamber in each case comprises at least one supply-air opening and in each case at least one exhaust-air opening, and wherein at least one fan (6) for forced ventilation of the chambers (4) and also air guides (7) between the fans (6) and the chambers (4) are provided, **characterized in that**
the chambers (4) are equipped with force-actuatable control flaps (8) in their respective cooling air flow.

2. System for cooling technical units (5) according to Claim 1,
**characterized in that**
a control device (9) and a plurality of temperature sensors (10) are provided, wherein the control device (9) controls the rotational speed of the fans (6) and the position of the control flaps (8) in dependence on the temperatures detected by the temperature sensors (10).

3. System for cooling technical units (5) according to Claim 2,
**characterized in that**
the control device (9) controls the control flaps (8) in such a way that a maximum temperature which is predetermined for a certain chamber (4) is not exceeded.

4. System for cooling technical units (5) according to one of Claims 1 to 3,
**characterized in that**
force-actuated connecting flaps (12) are arranged between adjacent chambers (4) and allow a serial through-flow and thus an exchange of cooling air between these chambers (4) .

5. System for cooling technical units (5) according to Claim 4,
**characterized in that**
the control device (9) is equipped with means for controlling the power drives of the connecting flaps (12) .

6. System for cooling technical units (5) according to one of Claims 1 to 5,
**characterized in that**
a pneumatic drive of the control flaps (8) is provided.

7. System for cooling technical units (5) according to one of Claims 1 to 5,
**characterized in that**
an electric drive of the control flaps (8) is provided.

## Revendications

1. Système de refroidissement d'installations techniques (5) dans un véhicule ferroviaire (1), comprenant un assemblage de conteneurs (3) comportant plusieurs chambres (4), chaque installation technique (5) étant disposée dans une chambre (4) lui étant attribuée qui comprend au moins une ouverture d'amenée d'air et au moins une ouverture d'évacuation d'air chacune, et au moins un ventilateur (6) assurant la ventilation forcée des chambres (4), des conduites d'air (7) entre les ventilateurs (6) et les chambres (4) étant par ailleurs prévus, **caractérisé en ce que** les chambres (4) sont pourvues de vannes de réglage (8) susceptibles d'être entraînées par moteur dans leur flux d'air de refroidissement respectif.

2. Système de refroidissement d'installations techniques (5) selon la revendication 1, **caractérisé en ce qu'** un organe de commande (9) et une pluralité de capteurs de température (10) sont prévus, l'organe de commande (9) commandant la vitesse de rotation des ventilateurs (6) et la position des vannes de réglage (8) en fonction des températures détectées par les capteurs de température (10) .

3. Système de refroidissement d'installations techniques (5) selon la revendication 2, **caractérisé en ce que** l'organe de commande (9) excite les vannes de réglage (8) de manière qu'une température maximum prédéfinie pour une chambre (4) précise ne soit excédée.

4. Système de refroidissement d'installations techniques (5) selon l'une des revendications 1 à 3, **caractérisé en ce que** des vannes de communication (12) à entraînement moteur sont disposées entre des chambres (4) adjacentes qui permettent un écoulement en série et par là un échange d'air de refroidissement entre lesdites chambres (4).

5. Système de refroidissement d'installations techniques (5) selon la revendication 4, **caractérisé en ce que** l'organe de commande (9) est pourvu de moyens d'excitation des moteurs des vannes de communication (12).

6. Système de refroidissement d'installations techniques (5) selon l'une des revendications 1 à 5, **caractérisé en ce qu'**un entraînement des vannes de réglage (8) par voie pneumatique est prévu.

7. Système de refroidissement d'installations techniques (5) selon l'une des revendications 1 à 5, **caractérisé en ce qu'**un entraînement des vannes de réglage (8) par voie électrique est prévu.
